(19) Europäisches Patentamt
European Patent Office
Office européen des brevets

(11) EP 3 375 821 A1

(12) EUROPEAN PATENT APPLICATION
published in accordance with Art. 153(4) EPC

(43) Date of publication:
**19.09.2018 Bulletin 2018/38**

(21) Application number: **17809166.6**

(22) Date of filing: **09.06.2017**

(51) Int Cl.:
***C08L 77/06*** *(2006.01)*

(86) International application number:
**PCT/CN2017/087696**

(87) International publication number:
**WO 2018/133295 (26.07.2018 Gazette 2018/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.01.2017 CN 201710040792**

(71) Applicants:
- **Zuhai Vanteque Specialty Engineering Plastics Co., Ltd.**
  **Jinwan District**
  **Zhuhai**
  **Guangdong 519050 (CN)**
- **Kingfa Sci. & Tech. Co., Ltd.**
  **Guangzhou, Guangdong 510663 (CN)**

(72) Inventors:
- **ZHANG, Chuanhui**
  **Guangdong 510663 (CN)**
- **CAO, Min**
  **Guangdong 510663 (CN)**
- **JIANG, Sujun**
  **Guangdong 510663 (CN)**
- **HUANG, Xianbo**
  **Guangdong 510663 (CN)**
- **MAI, Jiehong**
  **Guangdong 510663 (CN)**
- **LONG, Jieming**
  **Guangdong 510663 (CN)**
- **SHI, Zhenguo**
  **Guangdong 510663 (CN)**
- **YAN, Kun**
  **Guangdong 510663 (CN)**
- **FAN, Liming**
  **Guangdong 510663 (CN)**

(74) Representative: **Haseltine Lake LLP**
**Redcliff Quay**
**120 Redcliff Street**
**Bristol BS1 6HU (GB)**

# (54) SEMI-AROMATIC POLYAMIDE RESIN, METHOD FOR PREPARING SAME, AND POLYAMIDE MOLDING COMPOSITION CONSISTING OF SAME

(57) The present invention discloses a semiaromatic polyamide resin, a preparation method thereof, and a polyamide molding composition consisting of the same, which consists of following components:
(A) 20 to 95 wt% of a PA10T homopolymer derived from 1,10-decanediamine and terephthalic acid; and
(B) 5 to 80 wt% of a PA6T homopolymer derived from 1,6-hexanediamine and terephthalic acid.

Particularly, (A) + (B) =100 wt%.

In the present invention, by adding a certain amount of the PA10T homopolymer into the PA6T homopolymer, a melting point of the PA6T homopolymer can be significantly decreased to be below a decomposition temperature, and thereby a processability of the PA6T homopolymer is improved. The prepared semiaromatic polyamide resin has a decreased melting point, and may be processed normally. The polyamide molding composition consisting of the semiaromatic polyamide resin has a good processability, and has excellent surface properties.

EP 3 375 821 A1

## Description

### TECHNICAL FIELD

The present invention relates to a technical field of engineering plastics, and particularly relates to a semiaromatic polyamide resin and a preparation method thereof, and a polyamide molding composition consisting of the same.

### BACKGROUND

A PA6T homopolymer is polymerized from 1,6-hexanediamine and terephthalic acid. However, its melting point is up to 370°C, which is higher than its decomposition temperature, and thus it has no practical value.

As to the above-mentioned problems of the PA6T homopolymer, there are generally two solutions in the industry: copolymerization and extension of a carbon chain length. The copolymerization means adding other monomers such as adipic acid and sebacic acid into a polymerization system, thereby decreasing the melting point of the PA6T homopolymer to be below the decomposition temperature, in order for successful processing. The extension of the carbon chain length means replacing hexanediamine with long carbon chain diamine, which decreases the melting point while can decrease an amide bond concentration, and thereby a polyamide resin with a good processability and a low water absorption is obtained.

However, both of the above two solutions must start from a formulation-designing stage to solve the problems, and always need to alter a polymerization process and even an equipment, which is high cost.

The present invention has surprisingly discovered by research that, adding a certain amount of the PA10T homopolymer into the PA6T homopolymer can significantly decrease the melting point of the PA6T homopolymer to be below the decomposition temperature, thereby improving the processability of the PA6T homopolymer.

### SUMMARY OF THE INVENTION

In order to overcome the drawbacks and deficiencies in the prior art, a primary object of the present invention is to provide a semiaromatic polyamide resin that can significantly decrease a melting point of a PA6T homopolymer.

Another object of the present invention is to provide a preparation method of the above-described semiaromatic polyamide resin.

Another object of the present invention is to provide a polyamide molding composition containing the above-described semiaromatic polyamide resin, which can significantly improve a processability, and has excellent surface properties while maintains a relatively low water absorption.

The present invention is realized by following technical solution:
a semiaromatic polyamide resin, consisting of following components in percentage by weight:

(A) 20 to 95 wt% of a PA10T homopolymer derived from 1,10-decanediamine and terephthalic acid; and
(B) 5 to 80 wt% of a PA6T homopolymer derived from 1,6-hexanediamine and terephthalic acid;

wherein

$$(A) + (B) = 100\ wt\%.$$

As a preferred technical solution of the present invention, the semiaromatic polyamide resin consists of following components in percentage by weight:

(A) 30 to 85 wt% of the PA10T homopolymer derived from 1,10-decanediamine and terephthalic acid; and
(B) 15 to 70 wt% of the PA6T homopolymer derived from 1,6-hexanediamine and terephthalic acid;

wherein

$$(A) + (B) = 100\ wt\%.$$

As a further preferred technical solution of the present invention, the semiaromatic polyamide resin consists of following components in percentage by weight:

(A) 40 to 70 wt% of the PA10T homopolymer derived from 1,10-decanediamine and terephthalic acid; and
(B) 30 to 60 wt% of the PA6T homopolymer derived from 1,6-hexanediamine and terephthalic acid;

wherein

$$(A) + (B) = 100 \text{ wt\%}.$$

The semiaromatic copolyamide resin according to the present invention, with reference to ASTM D3418-2003, has a melting point of 280°C-340°C, preferably 285°C-320°C, more preferably 290°C-310°C, which is obviously decreased relative to a melting point of PA6T, and improves a processability of PA6T.

The PA6T homopolymer according to the present invention may be synthesized by conventional technical means in the art, and for example, is synthesized by following method:

adding hexanediamine, terephthalic acid, benzoic acid, sodium hypophosphite and water into a pressure reactor equipped with a magnetic coupling stir, a condenser tube, a gas-phase mouth, a feeding mouth and a pressure anti-explosion mouth; vacuumizing and filling the pressure reactor with high purity nitrogen as protection air, heating to 220°C within 2 hours under stirring, stirring a reaction mixture at 220°C for 1 hour, then heating a temperature of a reactant to 250°C under stirring; carrying on a reaction at a constant temperature of 250°C and under a constant pressure of 3.6MPa for 2 hours, keeping the pressure constant by removing water formed; carrying out a discharging after finishing the reaction, vacuum drying a prepolymer at 80 °C for 24 hours to obtain a prepolymerized product; solid-phase tackifying the prepolymerized product under a vacuum condition of 290°C and 50Pa to obtained the PA6T homopolymer.

The PA10T homopolymer according to the present invention may be synthesized by conventional technical means in the art, and for example, is synthesized by following method:

adding decanediamine, terephthalic acid, benzoic acid, sodium hypophosphite and water into the pressure reactor equipped with the magnetic coupling stir, the condenser tube, the gas-phase mouth, the feeding mouth and the pressure anti-explosion mouth; vacuumizing and filling the pressure reactor with high purity nitrogen as the protection air, heating to 220°C within 2 hours under stirring, stirring a reaction mixture at 220°C for 1 hour, then heating a temperature of a reactant to 240°C under stirring; carrying on a reaction at a constant temperature of 240°C and under a constant pressure of 3.0MPa for 2 hours, keeping the pressure constant by removing water formed; carrying out a discharging after finishing the reaction, vacuum drying a prepolymer at 80 °C for 24 hours to obtain a prepolymerized product; solid-phase tackifying the prepolymerized product under a vacuum condition of 250°C and 50Pa to obtain the PA10T homopolymer.

The present invention further discloses a preparation method of the semiaromatic polyamide resin, comprising following steps:

after uniformly mixing a PA6T homopolymer derived from 1,6-hexanediamine and terephthalic acid and a PA10T homopolymer derived from 1,10-decanediamine and terephthalic acid in proportion in a high-speed mixer, putting a mixture into a pulverizer to be pulverized into powders of 5-10 μm; adding the powders into a double-screw extruder through a main feed port, obtaining the semiaromatic polyamide resin after extruding, cooling by means of water, pelletizing and drying.

The present invention further discloses a polyamide molding composition containing the above-described semiaromatic polyamide resin, comprising following components in parts by weight:

| | |
|---|---|
| the semiaromatic polyamide resin | 30 to 100 parts; |
| a reinforcing filler | 0 to 70 parts; and |
| an additive | 0 to 50 parts; |

based on a total weight of the polyamide molding composition, an amount of the reinforcing filler is preferably 10 to 50 parts, more preferably 15 to 40 parts;

A too low amount of the reinforcing filler leads to relatively poor mechanical properties of the polyamide molding composition; and a too high amount of the reinforcing filler leads to severe glass emergence on a surface of a polyamide molding composition product, which influences an appearance of the product.

The reinforcing filler has a shape of a fibrous shape, with an average length of 0.01 mm to 20 mm, preferably 0.1 mm to 6 mm; and the reinforcing filler has a draw ratio of 5:1 to 2000:1, preferably 30:1 to 600:1. When the amount of the fibrous-shaped reinforcing filler is within the above-mentioned range, the polyamide molding composition shows a high heat deflection temperature and an increased high-temperature rigidity.

The reinforcing filler is an inorganic reinforcing filler or an organic reinforcing filler.

The inorganic reinforcing filler is selected from one or more of a glass fiber, a potassium titanate fiber, a metal-cladded glass fiber, a ceramic fiber, a wollastonite fiber, a metallic carbide fiber, a metal-solidified fiber, an asbestos

fiber, an alumina fiber, a silicon carbide fiber, a gypsum fiber or a boron fiber, preferably the glass fiber.

Using the glass fiber can not only enhance a moldability of the polyamide molding composition, but also improve the mechanical properties such as tensile strength, bending strength and bending modulus, and enhance heat resistance such as the heat deflection temperature when a thermoplastic resin composition is being molded.

The organic reinforcing filler is selected from an aromatic polyamide fiber and/or a carbon fiber.

The reinforcing filler has a shape of a non-fibrous shape, such as powder, particle, board, pin, fabric or felt shape, with an average particle size of 0.001 μm to 100 μm, preferably 0.01 μm to 50 μm.

When the average particle size of the reinforcing filler is less than 0.001 μm, poor melt processability of the polyamide resin is resulted in; and when the average particle size of the reinforcing filler is more than 100 μm, poor surface appearance of an injection molded product is resulted in.

The average particle size of the above-described reinforcing filler is tested by an adsorption method, which may be selected from one or more of a potassium titanate whisker, a zinc oxide whisker, an aluminum borate whisker, wollastonite, zeolite, sericite, kaolin, mica, talcum, clay, pyrophyllite, bentonite, montmorillonite, lithium montmorillonite, synthetic mica, asbestos, an aluminosilicate, aluminum oxide, silicon oxide, magnesium oxide, zirconium oxide, titanium oxide, ferric oxide, calcium carbonate, magnesium carbonate, dolomite, calcium sulfate, barium sulfate, magnesium hydroxide, calcium hydroxide, aluminum hydroxide, glass beads, ceramic beads, boron nitride, silicon carbide or silicon dioxide.

These reinforcing fillers may be hollow; besides, for swelling layered silicates such as bentonite, montmorillonite, lithium montmorillonite, synthetic mica and the like, an organized montmorillonite of which interlayer ions are cation-exchanged by an organic ammonium salt may be used.

In order to achieve better mechanical properties for the polyamide molding composition, a coupling agent may be used for a functional treatment of the inorganic reinforcing filler.

Particularly, the coupling agent is selected from a group consisting of an isocyanate series compound, an organic silane series compound, an organic titanate series compound, an organic borane series compound and an epoxy compound; preferably the organic silane series compound.

Particularly, the organic silane series compound is selected from one or more of an alkoxy silane compound containing an epoxy group, an alkoxy silane compound containing a sulfydryl group, an alkoxy silane compound containing a ureido group, an alkoxy silane compound containing an isocyanate group, an alkoxy silane compound containing a terminal amino group, an alkoxy silane compound containing a hydroxyl group, an alkoxy silane compound containing a unsaturated carbon-carbon group and an alkoxy silane compound containing an anhydride group.

The alkoxy silane compound containing the epoxy group is selected from one or more of γ-glycidylpropyltrimethoxy silane, γ-glycidylpropyltriethoxy silane and β-(3,4-epoxycyclohexyl)ethyltrimethoxy silane.

The alkoxy silane compound containing the sulfydryl group is selected from γ-mercaptopropyltrimethoxy silane and/or γ-mercaptopropyltriethoxy silane.

The alkoxy silane compound containing the ureido group is selected from one or more of γ-ureidopropyltriethoxy silane, γ-ureidopropyltrimethoxy silane and γ-(2-ureidoethyl)aminopropyltrimethoxy silane.

The alkoxy silane compound containing the isocyanate group is selected from one or more of γ-isocyanatopropyltriethoxy silane, γ-isocyanatopropyltrimethoxy silane, γ-isocyanatopropylmethyldimethoxy silane, γ-isocyanatopropylmethyldiethoxy silane, γ-isocyanatopropylethyldimethoxy silane, γ-isocyanatopropylethyldiethoxy silane and γ-isocyanatotrichloropropyl silane.

The alkoxy silane compound containing the terminal amino group is select from one or more of γ-(2-aminoethylamino)propyldimethoxymethyl silane, γ-(2-aminoethylamino)propyltrimethoxy silane and γ-aminopropyltrimethoxy silane.

The alkoxy silane compound containing the hydroxyl group is selected from γ-hydroxypropyltrimethoxy silane and/or γ-hydroxypropyltriethoxy silane.

The alkoxy silane compound containing the unsaturated carbon-carbon group is selected from one or more of γ-methacryloxypropyltrimethoxy silane, vinyltrimethoxysilane and N-β-(N-vinylbenzylaminoethyl-γ-aminopropyltrimethoxysilane hydrochloride.

The alkoxy silane compound containing the anhydride group is selected from [3-(trimethoxysilyl)propyl]succinic anhydride.

The organic silane series compound is preferably γ-methacryloxypropyltrimethoxy silane, γ-(2-aminoethylamino)propyldimethoxymethyl silane, γ-(2-aminoethylamino)propyltrimethoxy silane, γ-aminopropyltrimethoxy silane or [3-(trimethoxysilyl)propyl]succinic anhydride.

The inorganic reinforcing filler may be surface treated with the above-described organic silane series compounds according to conventional methods, and then melt-mixed with the polyamide resin to prepare the polyamide molding composition.

When the inorganic reinforcing filler is melt-mixed with the polyamide resin, the organic silane series compound may also be added thereto for in-situ mixing.

Particularly, an amount of the coupling agent is 0.05 wt% to 10 wt% with respect to a weight of the inorganic reinforcing filler, preferably 0.1 wt% to 5 wt%.

When the amount of the coupling agent is less than 0.05 wt%, an obvious effect of improved mechanical properties cannot be reached; and when the amount of the coupling agent is more than 10 wt%, the inorganic reinforcing filler aggregates easily and disperses poorly in the polyamide resin, resulting in decreased mechanical properties.

The additive is selected from one or more of a flame retardant, an impact modifier, an additional polymer and a processing agent.

Said additional polymer is selected from one or more of an aliphatic polyamide, a polyolefin homopolymer, an ethylene-$\alpha$-olefin copolymer and an ethylene-acrylate copolymer.

The processing agent is selected from one or more of an antioxidant, a heat-resistant stabilizer, a weatherability agent, a release agent, a lubricant, a pigment, a dye, a plasticizer and an antistatic agent.

The flame retardant is a composition of flame retardants, or a composition of a flame retardant and a flame retardant adjuvant. Based on the total weight of the polyamide molding composition, an amount of the flame retardant is preferably 0 to 40 parts. A too low amount of the flame retardant leads to a poor flame retardant effect, and a too high amount of the flame retardant leads to decreased mechanical properties of material.

The flame retardant is a halogen flame retardant or a halogen-free flame retardant.

The halogen flame retardant is selected from one or more of a brominated polystyrene, a brominated polyphenyl ether, a brominated bisphenol A type epoxy resin, a brominated styrene-maleic anhydride copolymer, a brominated epoxy resin, a brominated phenoxy resin, decabromodiphenyl oxide, decabromobiphenyl, a brominated polycarbonate, perbromotricyclopentadecane or a brominated aromatic cross-linked polymer, preferably the brominated polystyrene.

The halogen-free flame retardant is selected from one or more of a nitrogen-containing flame retardant, a phosphorus-containing flame retardant or a nitrogen- and phosphorus-containing flame retardant; preferably the phosphorus-containing flame retardant.

The phosphorus-containing flame retardant is selected from one or more of an aryl monophosphate, an aryl diphosphate, an dimethyl alkylphosphonate, triphenyl phosphate, tritolyl phosphate, trixylenyl phosphate, a propylbenzene series phosphate, a butylbenzene series phosphate and a phosphinate; preferably the phosphinate.

The phosphinate compound is represented by compounds shown as formulas I and/or II as follows:

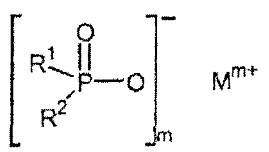

(I)

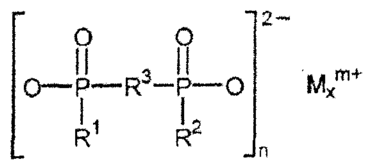

(II)

In the formula I and the formula II, $R^1$ and $R^2$ may be the same, or different, representing a linear or branched C1- to C6-alkyl, aryl or phenyl, respectively. $R^3$ represents a linear or branched C1- to C10-alkylene, C6- to C10-arylene, C6- to C10-alkylarylene, C6-to C10-arylalkylene. M represents calcium atom, magnesium atom, aluminum atom and/or zinc atom. M is 2 or 3, n is 1 or 3, and x is 1 or 2.

More specific examples of the phosphinate compound include calcium dimethyl phosphinate, magnesium dimethyl phosphinate, aluminum dimethyl phosphinate, zinc dimethyl phosphinate, calcium ethylmethyl phosphinate, magnesium ethylmethyl phosphinate, aluminum ethylmethyl phosphinate, zinc ethylmethyl phosphinate, calcium diethyl phosphinate, magnesium diethyl phosphinate, aluminum diethyl phosphinate, zinc diethyl phosphinate, calcium methyl n-propyl phosphinate, magnesium methyl n-propyl phosphinate, aluminum methyl n-propyl phosphinate, zinc methyl n-propyl phosphinate, calcium methanedimethyl phosphinate, magnesium methanedimethyl phosphinate, aluminum methanedimethyl phosphinate, zinc methanedimethyl phosphinate, calcium benzene-1,4-dimethyl phosphinate, magnesium benzene-1,4-dimethyl phosphinate, aluminum benzene-1,4-dimethyl phosphinate, zinc benzene-1,4-dimethyl phosphinate, calcium methylphenyl phosphinate, magnesium methylphenyl phosphinate, aluminum methylphenyl phosphinate, zinc methylphenyl phosphinate, calcium diphenyl phosphinate, magnesium diphenyl phosphinate, aluminum diphenyl phosphinate, zinc diphenyl phosphinate and the like, preferably calcium dimethyl phosphinate, aluminum dimethyl phosphinate, zinc dimethyl phosphinate, calcium ethylmethyl phosphinate, aluminum ethylmethyl phosphinate, zinc ethylmethyl phosphinate, calcium diethyl phosphinate, aluminum diethyl phosphinate, zinc diethyl phosphinate, and more preferably aluminum diethyl phosphinate.

The phosphinate compound used as the flame retardant is commercially available easily. Examples of the phosphinate compound which is commercially available include EXOLIT OP1230, OP1311, OP1312, OP930, OP935 and the like produced by Clariant.

The polyamide molding composition containing the above-described semiaromatic copolyamide resin of the present invention, based on the total weight of the polyamide molding composition, the additive component may further contain at most 45 wt% of one or more of the impact modifiers, preferably 5 wt% to 30 wt%.

Particularly, the impact modifier may be a natural rubber, polybutadiene, polyisoprene, polyisobutene, copolymers of butadiene and/or isoprene with styrene and/or derivatives of styrene and with other comonomers, a hydrogenated copolymer, and/or a copolymer prepared by being grafted or copolymerized with an anhydride, (meth)acrylic acid or an ester thereof. The impact modifier may further be a grafted rubber having a cross-linked elastomer core, the cross-linked elastomer core consists of butadiene, isoprene or an alkyl acrylate, and the impact modifier has a grafted shell consisting of polystyrene or may be a nonpolar or polar olefin homopolymer or copolymer, such as ethylene propylene rubber, ethylene-propylene-diene rubber, or ethylene-octene rubber, or ethylene-vinyl acetate rubber, or a nonpolar or polar olefin homopolymer or the copolymer prepared by being grafted or copolymerized with the anhydride, (meth)acrylic acid or the ester thereof. The impact modifier may further be a carboxylic acid-functionalized copolymer, such as poly(ethylene-co-(meth)acrylic acid) or poly(ethylene-1-olefin-co-(meth)acrylic acid), wherein 1-olefin is a chain olefin or an unsaturated (meth)acrylate having more than 4 atoms, including those copolymers that an acid group is neutralized by a metal ion to a certain extent.

The impact modifier based on a styrene monomer (styrene and derivatives of styrene) and other vinyl aromatic monomer, is a block copolymer consisting of an alkenyl aromatic compound and a conjugated diene, and a hydrogenated block copolymer consisting of the alkenyl aromatic compound and the conjugated diene, and combinations of these types of impact modifiers. The block copolymer contains at least one block a derived from the alkenyl aromatic compound and at least one block b derived from the conjugated diene. In the case of the hydrogenated block copolymer, a proportion of an aliphatic unsaturated carbon-carbon double bond may be decreased by a hydrogenation. Suitable block copolymers are di-, tri-, tetra- and multi-block copolymers having a linear chain structure. However, according to the present invention, a branched structure and an asteroid structure may also be used. A branched block copolymer obtained in known ways, may be obtained by for example a grafting reaction of a "side branched chain" of a polymer grafting to a backbone of the polymer.

Other alkenyl aromatic compound which may be used with styrene or used in a way with a mixture of styrene, is a vinyl aromatic monomer that an aromatic ring and/or the C=C double bond is substituted by C1-C20 alkyl or halogen atoms.

Examples of the alkenyl aromatic compound are styrene, *p*-methylstyrene, $\alpha$-methylstyrene, ethylstyrene, tert-butylstyrene, vinyltoluene, 1,2-diphenylethylene, 1,1-diphenylethylene, vinylxylene, vinyltoluene, vinylnaphthalene, divinyl benzene, bromostyrene, and chlorostyrene, and combinations thereof. Styrene, *p*-methylstyrene, $\alpha$-methylstyrene, and vinylnaphthalene are preferred.

Styrene, $\alpha$-methylstyrene, *p*-methylstyrene, ethylstyrene, tert-butylstyrene, vinyltoluene, 1,2-diphenylethylene, 1,1-diphenylethylene, or mixtures thereof are preferred. Usage of styrene is particularly preferred. However, an alkenylnaphthalene may also be used.

Examples of diene monomer that may be used are 1,3-butadiene, 2-methyl-1,3-butadiene, 2,3-dimethyl-1,3-butadiene, 1,3-pentadiene, 1,3-hexadiene, isoprene, chloroprene and trans-1,3-pentadiene. 1,3-butadiene and isoprene are preferred, especially 1,3-butadiene (shown as butadiene in an abbreviated form hereinafter).

An alkenyl aromatic monomer used preferably includes styrene, the diene monomer used preferably includes butadiene, and it means that a styrene-butadiene block copolymer is preferred. The block copolymer is generally prepared by polymerization of anions in its known way.

In addition to the styrene monomer and the diene monomer, other monomers may also be used simultaneously. Based on a total amount of monomers used, a proportion of the comonomer is preferably 0 to 50 wt%, particularly preferably 0 to 30 wt%, and particularly preferably 0 to 15 wt%. Examples of suitable comonomer are respectively the acrylate, especially C1-C12 alkyl acrylate such as n-butyl acrylate or 2-ethylhexyl acrylate, and a methacrylate, especially C1-C12 alkyl methacrylate such as methyl methacrylate (MMA). Other possible comonomers are (meth)acrylonitrile, (meth)glycidyl acrylate, methoxyethene, diallyl of glycol and divinyl ether, divinyl benzene and vinyl acetate.

In addition to the conjugated diene, the hydrogenated block copolymer may further include a lower hydrocarbon part if suitable, such as ethylene, propylene, 1-butylene, dicyclopentadiene or a non-conjugated diene. A proportion of an unreduced aliphatic unsaturated bond which is derived from the block b is less than 50% in the hydrogenated block copolymer, preferably less than 25%, especially less than 10%. An aromatic part which is derived from the block a is reduced to an extent of at most 25%. By hydrogenation of the styrene-butadiene copolymer and hydrogenation of a styrene-butadiene-styrene copolymer, the hydrogenated block copolymer is obtained, i.e. a styrene-(ethylene-butylene)

diblock copolymer and a styrene-(ethylene-butylene)-styrene triblock copolymer.

The block copolymer preferably includes 20 wt% to 90 wt% of the block a, especially 50 wt% to 85 wt% of the block a. The diene may be introduced to the block b in 1,2-orientation or 1,4-orientation.

A molar mass of the block copolymer is 5000 g/mol to 500000 g/mol, preferably 20000 g/mol to 300000 g/mol, especially 40000 g/mol to 200000 g/mol.

Suitable hydrogenated block copolymer is a commercially available product, such as G1650, G1651 and G1652 (Kraton polymer), and H1041, H1043, H1052, H1062, H1141 and H1272 (Asahi Chemicals).

Examples of a non-hydrogenated block copolymer are polystyrene-polybutadiene, polystyrene-poly(ethylene-propylene), polystyrene-polyisoprene, poly(α-methylstyrene)-polybutadiene, polystyrene-polybutadiene-polystyrene (SBS), polystyrene-poly(ethylene-propylene)-polystyrene, polystyrene-polyisoprene-polystyrene, and poly(α-methylstyrene)-polybutadiene-poly(α-methylstyrene), and combinations thereof.

Suitable non-hydrogenated block copolymers that are commercially available are multiple products with trademarks of Phillips, Shell, Dexco and Kuraray.

According to the polyamide molding composition comprising the above-described semiaromatic copolyamide resin of the present invention, the additive component may further comprise said additional polymer selected from the aliphatic polyamide, the polyolefin homopolymer, the ethylene-α-olefin copolymer and the ethylene-acrylate copolymer.

The aliphatic polyamide includes but not limited to one or more of an aliphatic diacid having 4-20 carbon atoms and an aliphatic diamine having 4-20 carbon atoms, or a lactam having 4-20 carbon atoms, or a polymer of the aliphatic diacid, the aliphatic diamine and the lactam having 4-20 carbon atoms. The aliphatic polyamide includes but not limited to poly(hexamethylene adipamide) (PA66), polycaprolactam (PA6), poly(hexamethylene sebacamide) (PA610), poly(decamethylene sebacamide) (PA1010), poly(hexamethylene adipamide-co-caprolactam) (PA66/6), polyundecanolactam (PA11), polylauryllactam (PA12), and a mixture of two or more thereof.

The ethylene-α-olefin copolymer is preferably an EP elastomer and/or an EPDM elastomer (ethylene-propylene rubber and ethylene-propylene-diene rubber, respectively). For example, the elastomer may comprise an elastomer based on ethylene-C3-C12-α-olefin copolymer containing 20 wt% to 96 wt%, preferably 25 wt% to 85 wt%, of ethylene, wherein a C3-C12-α-olefin is particularly preferred, including olefins selected from propylene, 1-butylene, 1-pentene, 1-hexene, 1-octene, 1-decene and/or 1-laurylene, and said additional polymer particularly preferred includes one or more of ethylene-propylene rubber, LLDPE and VLDPE.

Alternatively or additionally (for example in the mixture), said additional polymer may further comprise a terpolymer based on ethylene-C3-C12-α-olefin and the non-conjugated diene, here preferably it comprises 25 wt% to 85 wt% of ethylene and at most 10 wt% of the non-conjugated diene, and here the particularly preferred C3-C12-α-olefin includes an olefin selected from propylene, 1-butylene, 1-pentene, 1-hexene, 1-octene, 1-decene and/or 1-laurylene, and/or wherein the non-conjugated diene is preferably selected from bicyclo[2.2.1]heptadiene, 1,4-hexadiene, dicyclopentadiene and/or particularly 5-ethylidene-2-norbornene.

The ethylene-acrylate copolymer may also be used as components of said additional polymer.

Other possible forms of said additional polymer are an ethylene-butylene copolymer and a mixture (blend) containing these systems, respectively.

Preferably, said additional polymer comprises a component having an anhydride group, which is performed a thermal reaction or a free radical reaction of a backbone polymer with an unsaturated dicarboxylic anhydride, with an unsaturated dicarboxylic acid, or with a monoalkyl ester of the unsaturated dicarboxylic acid, being introduced in a concentration sufficient for well combining with the polyamide, and here the following agents are preferably used, selected from:

maleic acid, maleic anhydride, monobutyl maleate, fumaric acid, aconitic acid and/or itaconic anhydride. Preferably, 0.1 wt% to 4.0 wt% of the unsaturated anhydride is grafted onto an impact resistance component which is used as C component, or the unsaturated dicarboxylic anhydride or its precursor may be added by grafting with other unsaturated monomers. Generally, a grafting degree is preferably 0.1%-1.0%, particularly preferably 0.3%-0.7%. The other possible component of said additional polymer is a mixture consisting of the ethylene-propylene copolymer and the ethylene-butylene copolymer, and here a grafting degree of the maleic anhydride (grafting degree of MA) is 0.3%-0.7%.

The above-described possible system used for said additional polymer may also be used in a form of a mixture.

Besides, the additive component may comprise a component having a functional group, the functional group for example being a carboxyl group, an ester group, an epoxy group, an oxazolinyl group, a carbodiimide group, an isocyanate group, a silanol group and a carboxylic ester group, or the additive component may comprise a combination of two or more of the above-described functional groups. Monomers having the functional group may be combined by being copolymerized or being grafted onto an elastomer polyolefin.

Besides, the impact modifier based on the olefin polymer may also be modified by being grafted with an unsaturated silane compound, and the unsaturated silane compound is for example vinyltrimethoxysilane, vinyltriethoxysilane, vinyltriacetylsilane, methacryloxypropyltrimethoxysilane, or allyltrimethoxysilane.

The elastomer polyolefin is a random copolymer, an alternate copolymer or a block copolymer which has a

linear chain structure, a branched chain structure or a core-shell structure, and the elastomer polyolefin comprises a functional group which can react with a terminal group of the polyamide, and thus a sufficient compatibility is provided between the polyamide and the impact modifier.

Therefore, the impact modifier of the present invention includes a homopolymer of the olefin (such as ethylene, propylene, 1-butylene) or a copolymer of the olefin (such as polybutene-1), or a copolymer of the olefin and a copolymerizable monomer (such as vinyl acetate, (meth)acrylate, and methylhexadiene).

Examples of a crystallizable olefin polymer is a low-density polyethylene, a medium-density polyethylene and a high-density polyethylene, polypropylene, polybutadiene, poly-4-methylpentene, an ethylene-propylene block copolymer, or an ethylene-propylene random copolymer, an ethylene-methylhexadiene copolymer, a propylene-methylhexadiene copolymer, an ethylene-propylene-butylene copolymer, an ethylene-propylene-hexene copolymer, an ethylene-propylene-methylhexadiene copolymer, poly(ethylene-vinyl acetate) (EVA), poly(ethylene-ethyl acrylate) (EEA), an ethylene-octene copolymer, an ethylene-butylene copolymer, an ethylene-hexene copolymer, an ethylene-propylene-diene terpolymer, and combinations of above-described polymers.

Examples of the commercially available impact modifiers that may be used for the additive component are as follows:

TAFMER MC201: a blend of g-MA(-0.6%)67%EP copolymer (20mol% propylene)+33%EB copolymer (15mol% of 1-butylene)): Mitsui Chemicals, Japan.
TAFMER MH5010: g-MA(-0.6%) ethylene-butylene copolymer; Mitsui.
TAFMER MH7010: g-MA(-0.7%) ethylene-butylene copolymer; Mitsui.
TAFMER MH7020: g-MA(-0.7%)EP copolymer; Mitsui.
EXXELOR VA1801: g-MA(-0.7%)EP copolymer; Exxon Mobile Chemicals, US.
EXXELOR VA1803: g-MA(0.5-0.9%)EP copolymer, amorphous, Exxon.
EXXELOR VA1810: g-MA(-0.5%)EP copolymer, Exxon.
EXXELOR MDEX 9411: g-MA(0.7%)EPDM, Exxon.
FUSABOND MN493D: g-MA(-0.5%) ethylene-octene copolymer, DuPont, US.
FUSABOND A EB560D: (g-MA) ethylene-n-butyl acrylate copolymer, DuPont ELVALOY, DuPont.

Further, an ionic polymer is preferred, wherein carboxyl groups for polymer bonding are all bonded with each other or bonded to a certain extent by the metal ions.

The copolymer of butadiene and styrene which is graft-functionalized by maleic anhydride, the nonpolar or polar olefin homopolymer or copolymer prepared by being grafted with maleic anhydride, and a carboxylic-functionalized copolymer such as poly(ethylene-co-(meth)acrylic acid) or poly(ethylene-1-olefin-co-(meth)acrylic acid), are particularly preferred, wherein the acid group has been neutralized by the metal ions to some extent.

Besides, within the scope of not destroying effects of the present invention, various processing agents may be added to the polyamide resin of the present invention at any moment, such as the antioxidant and/or the heat-resistant stabilizer (a hindered phenol series, a hydroquinone series, a phosphite series and a substituent thereof, a copper halide, an iodine compound and the like), the weatherability agent (a resorcinol series, a salicylate series, a benzotriazole series, a diphenylketone series, a hindered amine series and the like), the release agent and the lubricant (an aliphatic alcohol, an aliphatic amide, an aliphatic bisamide, a diurea and a polyethylene wax and the like), the pigment (cadmium sulfide, phthalocyanine, carbon black and the like), the dye (nigrosine, aniline black and the like), the plasticizer (n-octyl 4-hydroxybenzoate, N-butyl benzenesulfon amide and the like), and the antistatic agent (an anionic antistatic agent of alkyl sulfate type, a cationic antistatic agent of quaternary ammonium salt type, a nonionic antistatic agent such as polyoxyethylene sorbitan monostearate, an amphoteric antistatic agent of betaine series).

In order to obtain a molding product of the present invention, the polyamide resin or the polyamide resin composition of the present invention may be molded by any molding method such as injection molding, extrusion molding, blow molding, vacuum molding, melt spinning and film molding. These molding products may be molded into a shape as required, and may be used in a resin molding product such as an automobile part and a mechanical part. As a specific use, they are available in the following uses: parts that contact with coolant inside an automobile engine room when used, such as an engine coolant part of automobile, especially a radiator tank part such as a top and a bottom of the radiator tank, a coolant storage tank, a water pipe, water pump parts such as a water pump housing, a water pump impeller and a valve; and electrical/electronic-related parts, automobile/vehicle-related parts, household appliances/office appliances parts, computer-related parts, fax machine/duplicator-related parts, mechanical-related parts and other various uses, represented by; switch types, a subminiature slide switch, a DIP switch, a switch housing, a lampholder, a strapping tape, an connector, a connector housing, a connector cover, IC socket types, a winding shaft, a spool cover, a relay, a relay cabinet, a capacitor case, an internal parts of a motor, a mini motor case, a gear cam, a balancing wheel, a gasket, an isolator, a fastener, a buckle, a clip, a bicycle wheel, a caster, a safety helmet, a terminal block, a shell of an electric tool, an insulation part of a starter, a spoiler, a tank, a radiator tank, a chamber tank, a fluid container, a fuse

block, an air purifier housing, an air conditioning fan, a terminal shell, a wheel casing, a suction/exhaust pipe, a bearing retainer, an air cylinder cover, an inlet manifold, a water pipe impeller, a clutch tripping lever, a loudspeaker oscillating plate, a heat-resistant container, a part of a microwave oven, a part of an electric cooker and a printer color tape guider.

Compared to the prior art, the present invention possesses the following beneficial effects:
in the present invention, by adding the certain amount of the PA10T homopolymer into the PA6T homopolymer, the melting point of the PA6T homopolymer can be significantly decreased to be below the decomposition temperature, and thereby the processability of the PA6T homopolymer is improved; the prepared semiaromatic polyamide resin has a decreased melting point, and may be processed normally; and the polyamide molding composition consisting of the semiaromatic polyamide resin has a good processability, and has excellent surface properties.

## DETAILED DESCRIPTION OF THE PREFERED EMBODIMENT

The present invention is further described below by specific implementations, and embodiments below are the preferred implementations of the present invention, but the implementations of the present invention are not limited by the following embodiments.

### Synthesis of a PA6T homopolymer:

400g (3.44mol) of hexanediamine, 548g (3.30mol) of terephthalic acid, 11.3g (0.09mol) of benzoic acid, 1.0g of sodium hypophosphite and 410g of water were added into a pressure reactor equipped with a magnetic coupling stir, a condenser tube, a gas-phase mouth, a feeding mouth and a pressure anti-explosion mouth. The pressure reactor was vacuumized and filled with high purity nitrogen as protection air, and was heated to 220°C within 2 hours under stirring, a reaction mixture was stirred at 220°C for 1 hour, and then a temperature of a reactant was heated to 250°C under stirring. The reaction was carried on at a constant temperature of 250°C and under a constant pressure of 3.6MPa for 2 hours, and the pressure was kept constant by removing water formed. A discharging was carried out after the reaction was finished, and a prepolymer was vacuum dried at 80 °C for 24 hours to obtain a prepolymerized product. The prepolymerized product was solid-phase tackified under a vacuum condition of 290°C and 50Pa to obtain the PA6T homopolymer. The PA6T homopolymer has a melting point of 370°C, and a relative viscosity of 2.33.

### Synthesis of a PA10T homopolymer:

400g (2.32mol) of decanediamine, 370.5g (2.23mol) of terephthalic acid, 10.3g (0.08mol) of benzoic acid, 1.0g of sodium hypophosphite and 340g of water were added into the pressure reactor equipped with the magnetic coupling stir, the condenser tube, the gas-phase mouth, the feeding mouth and the pressure anti-explosion mouth. The pressure reactor was vacuumized and filled with high purity nitrogen as the protection air, and was heated to 220°C within 2 hours under stirring, a reaction mixture was stirred at 220°C for 1 hour, and then a temperature of a reactant was heated to 240°C under stirring. A reaction was carried on at a constant temperature of 240°C and under a constant pressure of 3.0MPa for 2 hours, and the pressure was kept constant by removing water formed. A discharging was carried out after the reaction was finished, and a prepolymer was vacuum dried at 80 °C for 24 hours to obtain a prepolymerized product. The prepolymerized product was solid-phase tackified under a vacuum condition of 250°C and 50Pa to obtain the PA10T homopolymer. The PA10T homopolymer has a melting point of 316°C, and a relative viscosity of 2.35.

Other raw materials used in the present invention are all commercially available.

### Performance test methods:

A test method of a melting point of a semiaromatic polyamide resin: in accordance with ASTM D3418-2003; the specific test method is as follows: Perkin Elmer Dimond DSC Analyzer was used for testing the melting point of a sample; a nitrogen atmosphere with a flow rate of 40mL/min; the sample was heated to 340°C at a rate of 10°C/min, held at 340°C for 2 minutes, then cooled to 50°C at a rate of 10°C/min, and heated to 340°C at a rate of 10°C/min again, and an endothermic peak temperature at this moment was set as the melting point $T_m$.

Surface properties of polyamide molding composition moldings are characterized by a surface roughness Ra, a test of which was carried out in accordance with GB 10610-89 "*Rules and Procedures for the Measurement of Surface Roughness Using Stylus Instrument*" of the State Standard of the People's Republic of China. Specific steps are as follows: injection molding a sample into a 100mm×100 mm×2mm part; measuring a surface roughness value $R_a$ using a JB-6C stylus roughness meter manufactured by Guangzhou Guangzhuo Metering Instrument Co., Ltd. The bigger the $R_a$ is, the rougher the surface is.

A test method of water absorption: injection molding a sample into a 20mm×20mm×2mm part, with a weight recorded as aO; after placing the part into water at a temperature of 95°C for 240 hours, weighing the part with a weight

recorded as a1. And the water absorption = (a1-a0)/a0*100%.

**Preparation of semiaromatic polyamide resins A-G and A'**

After the PA10T homopolymer and the PA6T homopolymer were uniformly mixed in proportion of Table 1 in a high-speed mixer, a mixture was put into an AB10 type airflow pulverizer manufactured by Weifang Jinghua Powder Engineering Equipment Co., Ltd to be pulverized into powders of 5-10 μm; the powders were added into a double-screw extruder through a main feed port; after extruding, cooling by means of water, pelletizing and drying, the semiaromatic polyamide resin was obtained. Melting points of the obtained semiaromatic polyamide resins are listed in Table 1.

Table 1:

| | Resin A | Resin B | Resin C | Resin D | Resin E | Resin F | Resin G | Resin A' |
|---|---|---|---|---|---|---|---|---|
| PA6T homopolymer /wt% | 5 | 30 | 50 | 60 | 70 | 80 | 15 | 95 |
| PA10T homopolymer /wt% | 95 | 70 | 50 | 40 | 30 | 20 | 85 | 5 |
| melting point /°C | 325 | 290 | 293 | 307 | 320 | 335 | 312 | 348 |

It can be seen from Table 1 that, in the resins A-G, by adding a certain amount of the PA10T homopolymer into the PA6T homopolymer, a melting point of the PA6T homopolymer can be significantly decreased to be below a decomposition temperature, and the prepared semiaromatic polyamide resin has a decreased melting point, and may be processed normally.

**Embodiments 1-8 and Comparative Examples 1-2: preparation of polyamide molding composition**

After a semiaromatic polyamide resin, a reinforcing filler, and additives were uniformly mixed according to formulas in Table 2 in a high-speed mixer, a mixture was added into a double-screw extruder through a main feed port, and the reinforcing filler was side-fed through a side-feed scales. After extruding, cooling by means of water, pelletizing and drying, the polyamide composition was obtained. Respective performance results are shown as Table 2.

Table 2 Components and test results of performance of the polyamide molding compositions (parts by weight)

| | Embodiment1 | Embodiment 2 | Embodiment 3 | Embodiment 4 | Embodiment 5 | Embodiment 6 | Embodiment 7 | Embodiment 8 | Comparative Example 1 | Comparative Example 2 |
|---|---|---|---|---|---|---|---|---|---|---|
| Type of the semiaromatic polyamide resin | A | B | D | E | F | G | C | E | PA6T | A' |
| parts by weight of the semiaromatic polyamide resin | 50 | 50 | 50 | 50 | 75 | 30 | 60 | 60 | 50 | 50 |
| glass fiber OCV995 | 30 | 30 | 30 | 30 | 15 | 60 | 40 | 40 | 30 | 30 |
| Phosphinate OP 1230 | 15 | 15 | 15 | 15 | | | | | 15 | 15 |
| wollastonite | 3 | 3 | 3 | 3 | 5 | 5 | | | 3 | 3 |
| polybutylene-1 | 2 | 2 | 2 | 2 | 5 | 5 | | | 2 | 2 |
| water absorption /% | 1.0 | 1.2 | 1.3 | 1.4 | 2.3 | 0.7 | 1.3 | 1.5 | The melting point was too high, and it was unable to be processed. | 1.6 |
| $R_a$/um | 2.10 | 1.51 | 1.88 | 1.99 | 2.13 | 1.76 | 1.72 | 2.38 | | 4.76 |

It can be seen from Table 2 that, in the same formula of the molding composition, the polyamide molding composition containing the semiaromatic polyamide resin of the present invention has a good processability, and has excellent surface properties. The melting point of the pure PA6T is higher than the decomposition temperature, and it is unable to be processed. The resin A', due to a too high amount of PA6T, is close to the decomposition temperature, and there is a large number of small molecules of gas escape when melting, resulting in very rough product surface, and poor surface properties.

## Claims

1. A semiaromatic polyamide resin, **characterized in that**, the semiaromatic polyamide resin consists of following components in percentage by weight:

   (A) 20 to 95 wt% of a PA10T homopolymer derived from 1,10-decanediamine and terephthalic acid; and
   (B) 5 to 80 wt% of a PA6T homopolymer derived from 1,6-hexanediamine and terephthalic acid;

   wherein

   $$(A) + (B) = 100\ wt\%.$$

2. The semiaromatic polyamide resin according to claim 1, wherein the semiaromatic polyamide resin consists of following components in percentage by weight:

   (A) 30 to 85 wt% of the PA10T homopolymer derived from 1,10-decanediamine and terephthalic acid; and
   (B) 15 to 70 wt% of the PA6T homopolymer derived from 1,6-hexanediamine and terephthalic acid;

   wherein

   $$(A) + (B) = 100\ wt\%.$$

3. The semiaromatic polyamide resin according to claim 2, wherein the semiaromatic polyamide resin consists of following components in percentage by weight:

   (A) 40 to 70 wt% of the PA10T homopolymer derived from 1,10-decanediamine and terephthalic acid; and
   (B) 30 to 60 wt% of the PA6T homopolymer derived from 1,6-hexanediamine and terephthalic acid;

   wherein

   $$(A) + (B) = 100\ wt\%.$$

4. The semiaromatic polyamide resin according to any of claims 1 to 3, wherein with reference to ASTM D3418-2003, a melting point of the semiaromatic polyamide resin is 280°C-340°C, preferably 285°C-320°C, more preferably 290°C-310°C.

5. A preparation method of the semiaromatic polyamide resin according to any of claims 1 to 4, **characterized in that**, the preparation method comprises following steps:
   after uniformly mixing a PA6T homopolymer derived from 1,6-hexanediamine and terephthalic acid and a PA10T homopolymer derived from 1,10-decanediamine and terephthalic acid in a high-speed mixer in proportion, putting a mixture into a pulverizer to be pulverized into powders of 5-10 μm; adding the powders into a double-screw extruder through a main feed port, obtaining the semiaromatic polyamide resin after extruding, cooling by means of water, pelletizing and drying.

6. A polyamide molding composition containing the semiaromatic polyamide resin according to any of claims 1 to 4, comprising following components in parts by weight:

| | |
|---|---|
| the semiaromatic polyamide resin | 30 to 100 parts; |
| a reinforcing filler | 0 to 70 parts; and |
| an additive | 0 to 50 parts. |

**7.** The polyamide molding composition according to claim 6, wherein the reinforcing filler has a shape of a fibrous shape, with an average length of 0.01 mm to 20 mm, preferably 0.1 mm to 6 mm; the reinforcing filler has a draw ratio of 5:1 to 2000:1, preferably 30:1 to 600:1; based on a total weight of the polyamide molding composition, an amount of the reinforcing filler is 10 to 50 parts, preferably 15 parts to 40 parts; the reinforcing filler is an inorganic reinforcing filler or an organic reinforcing filler, the inorganic reinforcing filler being selected from one or more of a glass fiber, a potassium titanate fiber, a metal-cladded glass fiber, a ceramic fiber, a wollastonite fiber, a metallic carbide fiber, a metal-solidified fiber, an asbestos fiber, an alumina fiber, a silicon carbide fiber, a gypsum fiber or a boron fiber, preferably the glass fiber; and the organic reinforcing filler is selected from an aromatic polyamide fiber and/or a carbon fiber.

**8.** The polyamide molding composition according to claim 6, wherein the reinforcing filler has a shape of a non-fibrous shape, with an average particle size of 0.001 $\mu$m to 100 $\mu$m, preferably 0.01 $\mu$m to 50 $\mu$m, and is selected from one or more of a potassium titanate whisker, a zinc oxide whisker, an aluminum borate whisker, wollastonite, zeolite, sericite, kaolin, mica, talcum, clay, pyrophyllite, bentonite, montmorillonite, lithium montmorillonite, synthetic mica, asbestos, an aluminosilicate, aluminum oxide, silicon oxide, magnesium oxide, zirconium oxide, titanium oxide, ferric oxide, calcium carbonate, magnesium carbonate, dolomite, calcium sulfate, barium sulfate, magnesium hydroxide, calcium hydroxide, aluminum hydroxide, glass beads, ceramic beads, boron nitride, silicon carbide or silicon dioxide.

**9.** The polyamide molding composition according to claim 6, wherein the additive is selected from one or more of a flame retardant, an impact modifier, an additional polymer and a processing agent; the flame retardant is a halogen flame retardant or a halogen-free flame retardant, preferably the halogen-free flame retardant; and said additional polymer is one or more of an aliphatic polyamide, a polyolefin homopolymer, an ethylene-$\alpha$-olefin copolymer or an ethylene-acrylate copolymer.

# INTERNATIONAL SEARCH REPORT

International application No.
PCT/CN2017/087696

**A. CLASSIFICATION OF SUBJECT MATTER**

C08L 77/06 (2006.01) i

According to International Patent Classification (IPC) or to both national classification and IPC

B. FIELDS SEARCHED

Minimum documentation searched (classification system followed by classification symbols)

C08L 77/-

Documentation searched other than minimum documentation to the extent that such documents are included in the fields searched

Electronic data base consulted during the international search (name of data base and, where practicable, search terms used)

DATE BASES: CNPAT, CNKI, EPODOC, WPI

SEARCH TERMS: 聚酰胺, 半芳香族, 尼龙, 尼龙 10T, 尼龙 6T, polyamide, semi aromatic, PA10T, PA6T

C. DOCUMENTS CONSIDERED TO BE RELEVANT

| Category* | Citation of document, with indication, where appropriate, of the relevant passages | Relevant to claim No. |
|---|---|---|
| X | CN 103382305 A (KINGFA SCIENTIFIC AND TECHNOLOGICAL CO., LTD. et al.), 06 November 2013 (06.11.2013), description, paragraph 0034, embodiment 10 | 6 |
| X | 易庆锋等. “不同比例 PA10T/PA6T/66 合金的性能研究”, 塑料工业, 42(5), 20 May 2014 (20.05.2014), the abstract, and chapter 1.3, table 1, (YI, Qingfeng et al., “Property Characterization of PA10T/PA6T/66 Alloy with Different Ratio”, China Plastics Industry) | 1-5 |
| Y | 易庆锋等. “不同比例 PA10T/PA6T/66 合金的性能研究”, 塑料工业, 42(5), 20 May 2014 (20.05.2014), the abstract, and chapter 1.3, table 1, (YI, Qingfeng et al., “Property Characterization of PA10T/PA6T/66 Alloy with Different Ratio”, China Plastics Industry) | 6-9 |
| Y | CN 106117549 A (ZHUHAI VANTEQUE SPECIALTY ENGINEERING PLASTICS CO., LTD.), 16 November 2016 (16.11.2016), claims 6-9 | 6-9 |
| X | CN 104710780 A (SHANGHAI GENIUS ADVANCED MATERIAL GROUP CO., LTD.), 17 June 2015 (17.06.2015), description, paragraphs 42-45, embodiment 3 | 1-6, 8-9 |

☐ Further documents are listed in the continuation of Box C. ☒ See patent family annex.

* Special categories of cited documents:

“A” document defining the general state of the art which is not considered to be of particular relevance

“E” earlier application or patent but published on or after the international filing date

“L” document which may throw doubts on priority claim(s) or which is cited to establish the publication date of another citation or other special reason (as specified)

“O” document referring to an oral disclosure, use, exhibition or other means

“P” document published prior to the international filing date but later than the priority date claimed

“T” later document published after the international filing date or priority date and not in conflict with the application but cited to understand the principle or theory underlying the invention

“X” document of particular relevance; the claimed invention cannot be considered novel or cannot be considered to involve an inventive step when the document is taken alone

“Y” document of particular relevance; the claimed invention cannot be considered to involve an inventive step when the document is combined with one or more other such documents, such combination being obvious to a person skilled in the art

“&” document member of the same patent family

| Date of the actual completion of the international search | Date of mailing of the international search report |
|---|---|
| 11 July 2017 | 27 July 2017 |

Name and mailing address of the ISA
State Intellectual Property Office of the P. R. China
No. 6, Xitucheng Road, Jimenqiao
Haidian District, Beijing 100088, China
Facsimile No. (86-10) 62019451

Authorized officer
ZHENG, Jun
Telephone No. (86-10) 82246778

Form PCT/ISA/210 (second sheet) (July 2009)

**INTERNATIONAL SEARCH REPORT**
Information on patent family members

International application No.
PCT/CN2017/087696

| Patent Documents referred in the Report | Publication Date | Patent Family | Publication Date |
|---|---|---|---|
| CN 103382305 A | 06 November 2013 | None | |
| CN 106117549 A | 16 November 2016 | None | |
| CN 104710780 A | 17 June 2015 | None | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1061089 A